# EUROPEAN PATENT APPLICATION

(11) **EP 2 410 377 A1**
(43) Date of publication of application: **25.01.2012**
(21) Application number: 10170064.9
(22) Date of filing: 20.07.2010
(51) Int. Cl.: G03B 13/30, G06T 5/00

(54) **Method for decreasing depth of field of a camera having fixed aperture**

(71) Applicant: RESEARCH IN MOTION LIMITED, Waterloo, Ontario N2L 3W8 (CA)
(72) Inventor: Bugnariu, Calin, Nicolaie, Irving, TX 75039 (US); Kim, Jin, Kanata Ontario K2K 3K1 (CA)
(74) Representative: MERH-IP Matias Erny Reichl Hoffmann

(57) **Abstract**

A method and apparatus for decreasing the depth of field of images taken by a camera having a fixed aperture, comprising capturing a plurality of images; generating a depth map from the captured images; isolating a plurality of gray zones within the depth map; generating a plurality of image layers having respective depths of field corresponding to respective ones of the plurality of gray zones; selecting one of the image layers as a focus plane; blurring all other image layers; and superimposing the image layers to create a composite image wherein objects located at the focus plane are in focus and objects at all other depths of field are out of focus.

## Description

### FIELD

The present disclosure relates generally to digital cameras and more particularly to a method for decreasing the depth of field of images taken by a camera having a fixed aperture, adapted for use within a portable electronic device.

### BACKGROUND

Portable electronic devices continue to get smaller and incorporate more functions, such as traditional personal digital assistant ("PDA") functionality with cellular telephony and wireless email capability. In addition to functions oriented toward the business user, it is also known to incorporate music and video players as well as camera applications for consumer market devices.

Conventional film cameras use a photosensitive film to capture an image, whereas digital cameras use electronic photosensors such as charge coupled device (CCD) or complimentary metal oxide semiconductor (CMOS) chips. The term "photosensor" as used in this specification means any device(s) or material(s) capable of receiving and capturing radiant energy, and being at least partially capable of converting the radiant energy into electronic signals that become a virtual representation of the optical image. A CCD or CMOS "camera-on-a-chip" includes an array of very fine electronic "picture elements" or "pixels" arranged in horizontal rows and vertical columns that define an image resolution matrix.

When incorporating such a CCD or CMOS "camera-on-a-chip" into a portable electronic device of limited size, such as a PDA or smart phone, it is customary to use a small photosensor array, which results in pictures having very large depth of field and a "flat" appearance. For example, a 35 mm photosensor array at F2.8 and a 160 mm focal lens results in a 0.65 m depth of field whereas a smaller 23 mm photosensor array at F2.8 and a 100 mm focal lens results in a significantly larger 1.07 m depth of field. This problem may be addressed using conventional cameras by increasing the aperture so as to narrow the depth of field and thereby isolate the subject from the foreground and background. However, aperture adjustment may not be possible with simple CCD or CMOS "cameras-on-a-chip" as conventionally incorporated into a portable electronic device.

It is known in the prior art to use of a GNU Image Manipulation Program (GIMP) to create a shallow depth of field by maintaining a layer of an image in focus while blurring other layers, and generating a depth map from a pair of images of a scene, representing the distance of subjects in the scene from the camera; intermediate view interpolation of stereoscopic images for 3D display. Additional relevant prior art includes US Patent 4547055 and US Patent Publication No. 2007/0217776 and US Patent Publication No. 2008/0198220.

### SUMMARY

According to an aspect of this specification, there is provided a method of decreasing the depth of field of images taken by a camera, comprising capturing a plurality of images; generating a depth map from said images; isolating a plurality of gray zones within said depth map; generating a plurality of image layers having respective depths of field corresponding to respective ones of said plurality of gray zones; selecting one of said image layers as a focus plane; blurring all other ones of said image layers; and superimposing said image layers to create a composite image wherein objects located at said focus plane are in focus and objects at all other depths of field are out of focus.

According to another aspect there is provided a portable electronic device comprising at least one user input device; a camera; and a processor interconnecting said input device, camera and display, and configured for capturing a plurality of images; generating a depth map from said images; isolating a plurality of gray zones within said depth map; generating a plurality of image layers having respective depths of field corresponding to respective ones of said plurality of gray zones; selecting one of said image layers as a focus plane; blurring all other ones of said image layers; and superimposing said image layers to create a composite image wherein objects located at said focus plane are in focus and objects at all other depths of field are out of focus.

### BRIEF DESCRIPTION OF THE DRAWINGS

Embodiments, which are purely exemplary, will now be discussed with reference to the attached Figures in which:
Figure 1 is a schematic representation of a front view of a portable electronic device in accordance with an embodiment;
Figure 2 is a schematic representation of a rear view of the portable electronic device of Figure 1;
Figure 3 is a block diagram of certain internal components of the device of Figure 1; and
Figure 4, comprising Figures 4A and 4B, is a flowchart depicting a method decreasing the depth of field of images taken by a camera adapted for use within the portable electronic device of Figures 1 - 3.

### DETAILED DESCRIPTION OF THE EMBODIMENTS

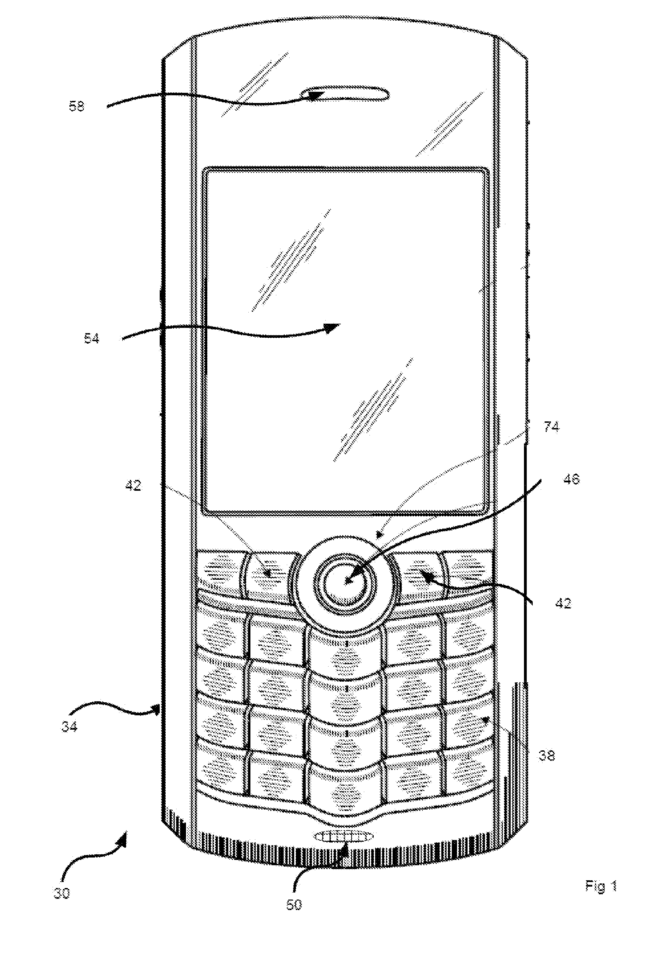

Referring now to Figure 1, a front view of a portable electronic device in accordance with an embodiment is indicated generally at 30. In the illustrated embodiment, device 30 includes the functionality of a wireless telephone, a wireless email paging device and a digital camera.

As best seen in Figure 1, device 30 includes a housing 34 that frames a plurality of input devices in the form of a keyboard 38, a set of keys 42 (one of which may be a menu key), a trackball 46 and a microphone 50. Housing 34 also frames a plurality of output devices in the form of a display 54 and a speaker 58.

Accordingly, a user of device 30 can interact with the input devices and output devices to send and receive emails, conduct voice telephone calls, manage appointments and contacts, browse the Internet, and perform such other functions as can be found on a known or as-yet unconceived electronic device such as device 30.

It is to be understood that device 30 is simplified for purposes of explanation, and that in other embodiments device 30 can include, additional and/or different functions and/or applications, and include input and output devices accordingly. Such other functionality can include music playing, audio recording and video playing. An example of a combined input/output device would include a Universal Serial Bus ("USB") port, a headset jack to connect a handsfree headset to device 30, or a BluetoothTM (or equivalent technology) transceiver. Likewise, it will be understood from the teachings herein that certain functions included in device 30 can be omitted.

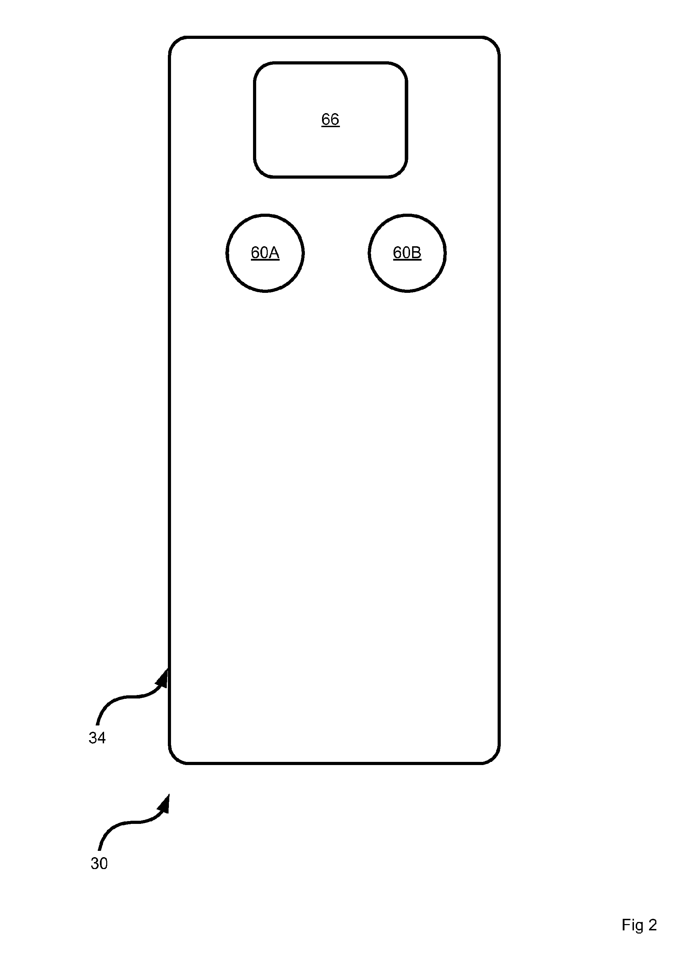

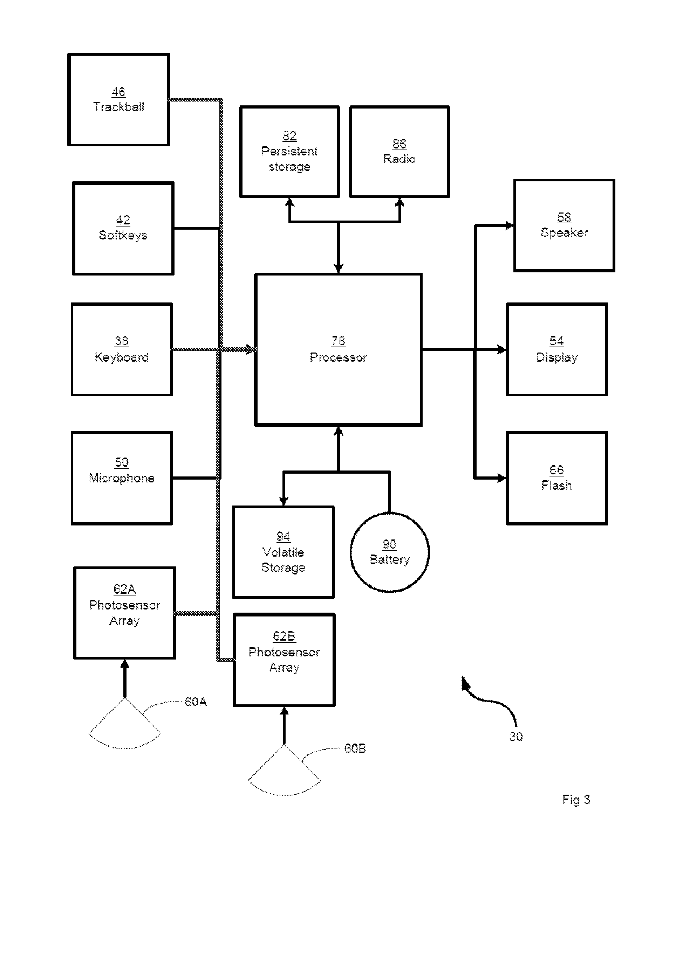

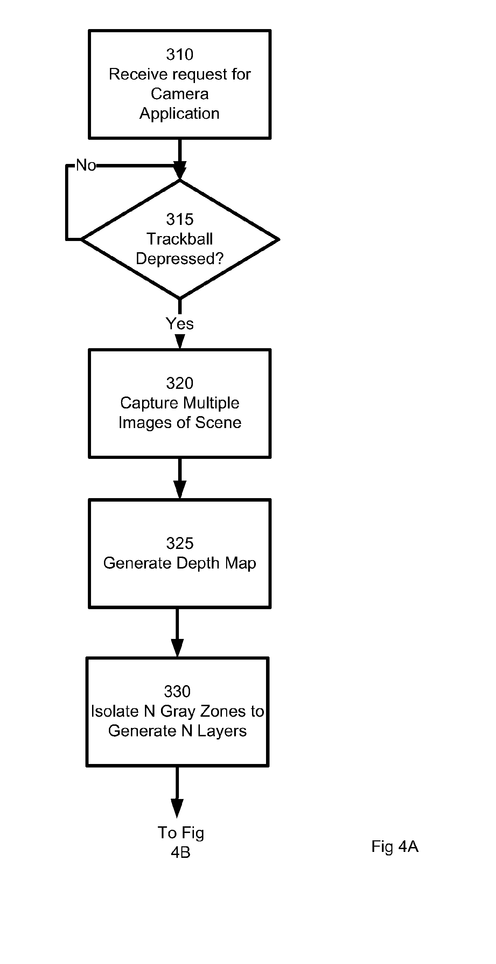

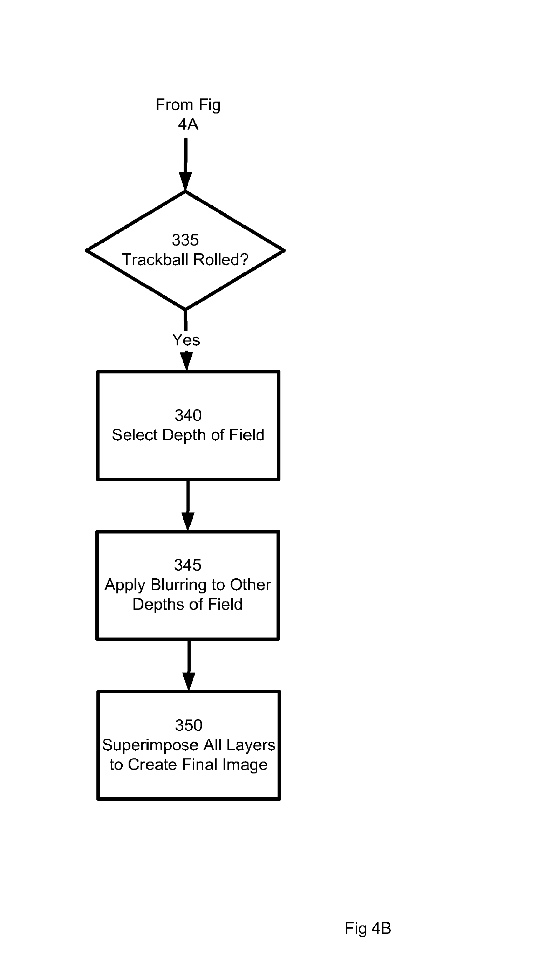

In a present embodiment, device 30 also includes a pair of cameras. Referring now to Figure 2, a rear view of device 30 is shown including camera lenses 60A and 60B and an additional output device in the form of a flash 66. As discussed in greater detail below with reference to Figures 3 and 4, lenses 60A and 60B focus light on image capturing photosensor arrays 62A and 62B, respectively (discussed below in connection with Figure 3), each of which incorporates an array of photosensitive elements, for creating an electronic signal of the image that impinges thereon via the respective camera lens 60A or 60B.

In one embodiment, the form factor of device 30 is constructed so that a user can grasp device 30 with either a left hand, or right hand, and be able to activate keys 42 and trackball 46 with the thumb. (While trackball 46 is configured for the thumb, it should be understood that users can use other digits on their hands as well). By the same token, lenses 60A, 60B and photosensor arrays 62A, 62B are disposed behind display 54 so that the index finger of the user, when wrapped around device 30, does not obscure the lenses and thereby interfere with the use of device 30 as a camera. The positioning of lenses 60A, 60B behind display 54 also improves the usability of display 54 as a viewfinder when device 30 is acting as a camera, as the display 54 will present the scenery to the user that is directly behind display 54. Although device 30 is depicted with an input device in the form of a trackball 46, the concept described herein can be adapted to other navigation apparatus, such as a trackwheel or an optical trackpad. Some embodiments of optical trackpads, for example, are responsive to movements like the rotational movements that would rotate trackbell 46, and depressions like those that would depress trackball 46.

Referring now to Figure 3, a block diagram representing certain internal components of device 30 is shown. Device 30 thus includes a processor 78 which interconnects the input devices of device 30 (i.e. trackball 46, keys 42, keyboard 38, photosensor arrays 62A, 62B and microphone 50) and the output devices of device 30 (i.e. speaker 58, display 54 and flash 66). Processor 78 is also connected to a persistent storage device 82. (Persistent storage device 82 can be implemented using flash memory or the like, and/or can include other programmable read only memory (PROM) technology and/or can include read-only memory (ROM) technology and/or can include a removable "smart card" and/or can be comprised of combinations of the foregoing.) As discussed in greater detail below, processor 78 executes a plurality of applications stored in persistent storage device 82, such as an email application, telephony application, Web-browsing application calendar application, contacts application, camera application and other applications that will be known to a person of skill in the art.

Device 30 may also include a wireless radio 86 disposed within housing 34 that connects wirelessly to one of a network of base stations to provide the wireless email, telephony and Web-browsing application functionality referred to above.

Device 30 also includes a power supply, represented in Figure 3 as a battery 90 which is typically rechargeable and provides power to the components of device 30. In a present, purely exemplary embodiment, battery 66 is a lithium battery having an operating voltage of between about 3.0 Volts minimum to about 4.2 Volts maximum. In Figure 3, for simplicity battery 90 is only shown connected to processor 78, but it will be understood that battery 90 is connected to any component (e.g. photosensor chip 62, radio 88, display 54 and flash 66) within device 30 that needs power to operate.

Device 30 may also include volatile storage 94, which can be implemented as random access memory (RAM), which can be used to temporarily store applications and data as they are being used by processor 78.

As discussed above, examples of known photosensor arrays 62A, 62B include charge coupled devices (CCDs) and CMOS devices, which create an electronic signal of the image that impinges thereon via the respective camera lenses 60A, 60B. As will be known to a person of skill in the art, each photosensor array 62a, 62B comprises horizontal rows and vertical columns of photosensitive pixels that define an image resolution matrix. The maximum resolution of the camera determines the size of the pixel array. Thus, a 1.3 MP camera has a pixel array of dimensions 1280 x 1024, while a 2 MP camera has a pixel array of dimensions 1600 x 1200 (actually 1.9 MP). Each pixel also has an image resolution "depth". For example, the pixel depth of the may be 8 bits, wherein the minimum pixel brightness value is 0 and the maximum pixel brightness (saturation) value is 255.

Upon exposure to imaging light from a subject, the lenses 60A, 60B focus light onto the respective photosensor array 62A, 62B which collects discrete light energies or photon charges corresponding to or mapping the photographic subject or object column-by-column, row-by-row, and pixel-by-pixel such that a photon charge representation of the subject is obtained. The photosensor arrays 62A, 62B process the photon charges and convert them into useful digital signals that are clocked out for storage in volatile memory 94.

Referring now to Figure 4, which comprises Figures 4A and 4B, a method is set forth according to an embodiment for decreasing the depth of field of a picture taken by the camera of device 30. To assist in understanding the exemplary method, the method will be explained in terms of its performance using device 30. However, it is to be understood that this discussion is not to be construed in a limiting sense, and that the method can be performed on devices other than device 30, and/or the method can be varied.

Beginning at step 310, a request for the camera application is received. On device 30, this step can be effected by a user rolling the trackball 46 in response to which processor 78 causes display 54 to scroll through the various device applications, until the camera application is highlighted. Once highlighted, the user can depress trackball 46 to actually request the camera application. When processor 78 receives an input via trackball 46 indicating that the user desires to use the camera application, method 300 will advance from step 310 to step 315.

Next, at step 315, if the trackball is depressed, and provided the camera has an auto-focus function, the camera lenses 60A and 60B are oriented toward the same scene (i.e. operating as a stereoscopic camera), and two images are captured simultaneously (step 320) to create a depth map (i.e. a gray level picture where closer objects are represented with brighter intensity than distant objects). Optionally, the two images may be taken with different exposures in order to increase dynamic range (i.e. the ratio between the smallest luminance value of one image and the largest luminance value of the other image). Alternatively, if the device 30 contains only a single camera lens and photosensor array, then two or more consecutive images may be captured at different convergence plans (step 320) using the auto-focus function and, optionally, at different exposures in order to increase the dynamic range. At step 325, a depth map is generated from the multiple images.

Each pixel in the depth map has a gray level value (e.g. a value in the range [0, 255] for 8 bit representation), wherein each gray level value corresponds to a distance from the camera lens. In general, the gray level value of a pixel is a function of its brightness (not necessarily a function of its color), and the brightness of a pixel is generally a function of the distance from the camera lens to the object whose image comprises the pixel. Thus, at step 330, N gray zones are isolated from the depth map. Each gray zone corresponds to a range of grey level values. The N gray zones may be isolated by generating a negative mask for each range of grey level values, wherein each negative mask filters all pixels that are outside of the associated range. Thus, each negative mask represents portions of the depth map having gray scale brightness within the range of the mask. For example, a first negative mask can be generated to filter all pixels having gray values other than those representing a first depth range (e.g. a range of 0 to 2 meters), a second negative mask can be generated to filter all pixels having gray values other than those representing a second depth range (e.g. a range of 2 to 4 meters), and so on. Thus, at step 330, each mask effectively selects for an image the pixels that are within a particular gray level value range, and disregards others that are outside of that range. By use of different masks that select for different ranges, an arbitrary number (N) of layered images (e.g. 5-10 layered images) are generated (step 333), wherein each layered image includes objects within a specific distance or depth range from the lens corresponding to a respective gray zone. Each application of the negative mask to the depth map results in a layer that contains only portions of the depth map having gray scale brightness within the range of the mask. For example, if the depth map is resolved into five layers at ranges of 1, 3, 5, 7 and 9 meters, then the first layer includes portions of the image within a depth range of 0 - 2 meters, the second layer includes portions of the image within a depth range of 2 - 4 meters, the third layer includes portions of the image within a depth range of 4 - 6 meters, the fourth layer includes portions of the image within a depth range of 6 - 8 meters and the fifth layer includes portions of the image within a depth range of 8 - ∞ meters. The N negative masks can be saved in memory of device 30 (e.g. persistent storage 82) and successively applied to the depth map by processor 78.

At step 335, processor 78 detects whether the trackball 46 has been rolled. If, the trackball 46 is rolled in one direction (e.g. vertically) then, at step 340, the device 30 selects one of the depth of field zones (i.e. one of the N layers) and, at step 345, blurring is applied to all other layers. In other words, a user may use trackball 46 (or another navigation device) to indicate a preference for or against use of a particular layer as the layer that is not blurred, and the device 30 may select a zone that corresponds to the user's preference. In a variation, the device 30 selects a depth of field zone automatically without expression of user preference. In another variation, the user may indicate a preference for the amount of blurring. The intensity or amount of blurring may be controlled by rolling the trackball 46 in another direction (e.g. horizontally). In some embodiments, the device 30 can select the amount of blurring automatically to be proportional to distance from the selected depth of field layer and/or increasing at a greater rate for layers closer to the camera than layers further from the camera than the selected layer. Generally speaking, sharpening algorithms and blurring algorithms produce opposite results in an image. A sharpening algorithm is any image processing procedure that clarifies or sharpens or enhances detail in an image, and a blurring or fuzziness algorithm is any image processing procedure that reduces image detail

The application of blurring creates a perception of depth of field and varying the amount of blurring (i.e. via rolling of the trackball 46) determines how narrow the depth of field should be for the final image. Various blurring or fuzziness algorithms are known in the art (e.g. Gaussian blurring) for "splashing" pixels within an image. Optionally, a sharpening algorithm may also be allied to the selected depth of field layer.

Finally, at step 350, the final image is created by superimposing the selected and blurred layers according to their respective depths of field.

One or more advantages may be realized from one or more implementation of the concepts described above. Some of the possible advantages have been mentioned already. Improvement in picture quality can be realized, in that pictures may appear less "flat." The photographic subject may be more pronounced, and the picture may resemble one taken with a device having a narrower depth of field. Further, the concepts can be implemented in a wide variety of devices, including devices that lack the capability of making aperture adjustments and devices that can take stereoscopic pictures.

The foregoing represents exemplary embodiments only. Other embodiments and variations are contemplated. For example, it is contemplated that voice activation may be employed (via microphone 50) for the user to control functionality of the camera application, such as zooming (in or out), image cropping, etc., rather than using the trackball 46 and/or softkeys 42.These and other embodiments are believed to be within the scope of the claims attached hereto.

## Claims

1. A method of decreasing the depth of field of images taken by a camera (60A, 60b), comprising:
capturing (320) a plurality of images;
generating (325) a depth map from said images;
isolating (330) a plurality of gray zones within said depth map;
generating (333) a plurality of image layers having respective depths of field corresponding to respective ones of said plurality of gray zones;
selecting (340) one of said image layers as a focus plane;
blurring (345) all other ones of said image layers; and
superimposing (350) said image layers to create a composite image wherein objects located at said focus plane are in focus and objects at all other depths of field are out of focus.

2. The method of claim 1 wherein generating (333) said plurality of image layers further comprises creating respective negative masks corresponding to each of said gray zones and respectively applying said negative masks to said depth map to generate said plurality of image layers.

3. The method of claim 1 or 2 wherein said blurring (345) is proportional to distance of respective ones of said layers from the selected one of said layers.

4. The method of any of claims 1 to 3 wherein said blurring (345) increases at a greater rate for ones of said layers that are closer to said camera than one of said layers that are further from said camera than the selected one of said layers.

5. The method of any of claims 1 to 4 further including sharpening said selected one of said image layers.

6. The method of any of claims 1 to 5 further including adjusting the amount of said blurring (3450 prior to superimposing (350) said image layers to create said composite image.

7. The method of any of claims 1 to 6, wherein said blurring includes applying a fuzziness algorithm to pixels within said other ones of said image layers.

8. The method of any of claims 1 to 7 wherein capturing said plurality of images further comprises using an auto-focus function of said camera to capture consecutive images at different convergence plans.

9. A portable electronic device (30) comprising:
at least one input device (46);
a camera (60A, 60B); and
a processor (78) interconnecting said input device and camera, and configured for
capturing a plurality of images;
generating a depth map from said images;
isolating a plurality of gray zones within said depth map;
generating a plurality of image layers having respective depths of field corresponding to respective ones of said plurality of gray zones;
selecting one of said image layers as a focus plane;
blurring all other ones of said image layers; and
superimposing said image layers to create a composite image wherein objects located at said focus plane are in focus and objects at all other depths of field are out of focus.

10. The device of claim 9, wherein said at least one user input is a trackball and wherein said processor is configured to detect rolling of said trackball and to adjust the amount of said blurring in accordance with said rolling prior to superimposing said image layers to create said composite image.

11. The device of any of claims 9 to 10, wherein said at least one user input is a trackball and wherein said processor is configured to receive rolling input from said trackball to select said one of said image layers as a focus plane.

12. The device of any of claims 9 to 11, wherein capturing said plurality of images further comprises using an auto-focus function of said camera to capture consecutive images at different convergence plans.

## Amended claims

### Amended claims in accordance with Rule 137(2) EPC.

**1.** A method of decreasing the depth of field of images taken by a camera (60A, 60b), comprising:
capturing (320) a plurality of images,
generating (325) a depth map from said images, wherein said depth map comprises a gray level picture where closer objects are represented with brighter intensity than distant objects:
isolating (330) a plurality of gray zones within said depth map;
generating (333) a plurality of image layers having respective depths of field corresponding to respective ones of said plurality of gray zones;
selecting (340) one of said image layers as a focus plane;
blurring (345) all other ones of said image layers by means of a an image processing procedure that reduces image detail in said other ones of said image layers; and
superimposing (350) the selected and blurred image layers according to their respective depths of field to create a composite image wherein objects located at said focus plane are in focus and objects at all other depths of field are out of focus.

**2.** The method of claim 1 wherein generating (333) said plurality of image layers further comprises creating respective negative masks corresponding to each of said gray zones and respectively applying said negative to said depth map to generate said plurality of image layers,

**3.** The method of claim 1 or 2 wherein said blurring (345) is proportional to distance of respective ones of said layers from the selected one of said layers.

**4.** The method of any of claims 1 to 3 wherein said blurring (345) increases at a greater rate for ones of said layers that are closer to said camera than one of said layers that are further from said camera than the selected one of said layers.

**5.** The method of any of claims 1 to 4 further including sharpening said selected one of said image layers.

**6.** The method of any of claims 1 to 5 further including adjusting the amount of said blurring (3450 prior to superimposing (350) said image layers to create said composite image.

**7.** The method of any of claims 1 to 6, wherein said blurring includes applying a fuzziness algorithm to pixels within said other of said image layers.

**8.** The method of any of claims 1 to 7 wherein capturing said plurality of images further comprises using an auto-focus function of said camera to capture consecutive images at different convergence plans.

**9.** A portable electronic device (30) comprising:
at least one input device (46);
a camera (60A, 60B); and
a processor (78) interconnecting said input device and camera, and configured for capturing (320) a plurality of images;
generating (325) a depth map from said images, wherein said depth map comprises a gray level picture where closer objects are represented with brighter intensity than distant objects;
isolating (330) a plurality of gray zones within said depth map;
generating (333) a plurality of image layers having respective depths or field corresponding to respective ones of said plurality of gray zones; selecting (340) one of said image layers as a focus plane;
blurring (345) all other ones of said image layers by means of a an image processing procedure that reduces image detail in said other ones of said image layers; and
superimposing (350) the selected and blurred image layers according to their respective depths of field to create a composite image wherein objects located at said focus plane are in focus and objects at all other depths of field are out of focus.

**10.** The device of claim 9, wherein said at least one user input is a trackball and wherein said processor is configured to detect rolling of said trackball and to adjust the amount of said blurring in accordance with said rolling prior to superimposing said image layers to create said composite image.

**11.** The device of any of claims 9 to 10, wherein said at least one user input is a trackball and wherein said processor is configured to receive rolling input from said trackball to select said one of said image layers as a focus plane.

**12.** The device of any of claims 9 to 11, wherein capturing said plurality of images further comprises using an auto-focus function of said camera to capture consecutive images at different convergence plans.
